# EUROPEAN PATENT APPLICATION

(11) **EP 1 482 007 A1**
(43) Date of publication of application: **01.12.2004**
(21) Application number: 04010491.1
(22) Date of filing: 03.05.2004
(51) Int. Cl.: C08K 3/34, C08L 21/00, B60C 1/00

(54) **Rubber compound for tire and tire employing the same**

(30) Priority: 30.05.2003 JP 2003153838; 12.11.2003 JP 2003382654
(71) Applicant: Sumitomo Rubber Industries Ltd., Kobe-shi, Hyogo-ken (JP)
(72) Inventor: Hirayama, Michio, 3-chome Chuo-ku Kobe-shi, Hyogo (JP)
(74) Representative: Manitz, Finsterwald & Partner GbR

(57) **Abstract**

There is provided a rubber compound for a tire that can provide improved performance on ice, enhanced steering stability and prevent lost blocks without significantly reduced abrasion resistance, and a tire using the rubber compound. It relates to a rubber compound for a tire that contains pumice containing no less than 30% by mass of silicon oxide and has a JIS-A hardness of 55-75, and a tire using the rubber compound. The pumice preferably contains no less than 50% by mass of particles having a diameter of 45-250 µm. Furthermore, 2-20 parts by mass of the pumice is preferably blended relative to 100 parts by mass of rubber. To produce the present rubber compound, together with the pumice a silane coupling agent is preferably blended together.

## Description

This nonprovisional application is based on Japanese Patent Applications Nos. 2003-153838 and 2003-382654 filed with the Japan Patent Office on May 30, 2003 and November 12, 2003, respectively, the entire contents of which are hereby incorporated by reference.

### BACKGROUND OF THE INVENTION

### Field of the Invention

The present invention relates generally to rubber compounds for tires and particularly to rubber compounds for tires that can maintain abrasion resistance, and also achieve enhanced performance on ice and increased steering stability and prevent lost blocks, and tires using the rubber compound.

### Description of Related Art

To prevent vehicles from slipping on snowy and icy roads, studded tires have conventionally been used. However, the use of studded tires has been prohibited by law to prevent dust pollution and in recent years studded tires have been increasingly replaced by studless tires. As variety of improvements have been made, and studless tires that grip almost as well as studded tires are currently used.

When a tire grips on ice the ice's surface generates water. The tire floats on the water and can no longer sufficiently grip and as a result slips. Accordingly a method has been proposed in Japanese Patent Laying-Open No. 2002-53704 to adsorb or remove water present between a tire and an icy surface to allow the tire and the icy surface to directly, closely contact each other to achieve enhanced grip. More specifically, as disclosed in the publication, relative to 100 parts by weight of a rubber component of a tread rubber compound 2-15 parts by weight of natural glass in the form of a plate having an average diameter of 45-250 µm is blended to provide a Shore A hardness in a range of 35-55. This method, however, cannot satisfy abrasion resistance required by tires for large scale vehicles.

Furthermore, U.S. Publication No. 2003/0069345A1 also proposes a method employing a rubber compound containing relative to 100 parts by mass of diene rubber 2-30 parts by mass of short fiber having an average diameter of 10-20 µm and an average length of 0.01-4 mm and 1-10 parts by mass of particles having a Mohs hardness of no less than 5 and an average diameter of no more than 500 µm. However, this method also cannot sufficiently effectively remove water between a tire and an icy surface. Furthermore, to obtain sufficient grip, a considerable amount of the short fiber or a considerable amount of the particles needs to be blended, which contributes to reduced workability and reduced abrasion resistance.

Furthermore, a studless tire typically has a tread area entirely provided with relatively small blocks each having a surface provided with a large number of sipes to have a pattern. Such a pattern is designed particularly to achieve enhanced braking and traction on snowy and icy roads, and in designing the tire's material, conditions that a vehicle running in cold districts experiences are considered. Accordingly, when the vehicle runs on a dry road, significant friction and driving force will act on the pattern's blocks for a long period of time and their sipes experience internal stress concentrated at their bottoms. This causes a fatigue crack, resulting in the tire having a reduced life.

In particular, for tread rubber having particles blended to provide enhanced performance on ice, tread rubber foamed for a similar purpose, and the like, the particles or the foam introduces cavities having a size larger than other blended components, and from the cavities cracks are readily caused and as a result the tire is insufficiently prevented from losing blocks. Blocks larger in size or reduced in number, or sipes reduced in number or decreased in depth may be employed to avoid this problem, although such entails sacrificing the performance on snowy roads and that on wet roads.

### SUMMARY OF THE INVENTION

The present invention overcomes the above disadvantage and it contemplates a rubber compound for tires that can effectively remove water present between the tire and an icy surface to ensure that the tire can sufficiently grip the icy surface to achieve improved performance on ice and enhanced steering stability without reduced abrasion resistance and also further prevent lost blocks. Furthermore, the present invention applies the compound to a tire tread to provide a tire that can present excellent performance on ice, achieve enhanced steering stability and prevent lost blocks.

The present invention provides a rubber compound for a tire that contains pumice containing no less than 30% by mass of silicon oxide and has a JIS-A hardness of 55-75, and a tire using the rubber compound. The pumice preferably contains no less than 50% by mass of particles having a diameter of 45-250 µm. Furthermore, 2-20 parts by mass of the pumice is preferably blended relative to 100 parts by mass of rubber. To produce the present rubber compound, together with the pumice a silane coupling agent is preferably blended together.

The present invention also provides a rubber compound for a tire that preferably has 2-20 parts by mass of pumice blended relative to 100 parts by mass of rubber, and a silane coupling agent further blended together, and a tire using the compound.

The present rubber compound is formed by blending pumice having no less than a fixed content of silicon oxide into a rubber compound and setting the rubber compound's JIS-A hardness to fall within a fixed range to effectively remove water present between the tire and an icy surface so that the tire can sufficiently grip the icy surface. The tire can thus have achieve improved performance on ice and enhanced steering stability without reduced abrasion resistance. Furthermore, together with a prescribed amount of the pumice a silane coupling agent can be blended into the rubber compound to prevent a crack starting between the rubber and the pumice. In addition to improved performance on ice and enhanced steering stability, a tire excellently preventing lost blocks can be obtained.

The foregoing and other objects, features, aspects and advantages of the present invention will become more apparent from the following detailed description of the present invention when taken in conjunction with the accompanying drawings.

### BRIEF DESCRIPTION OF THE DRAWINGS

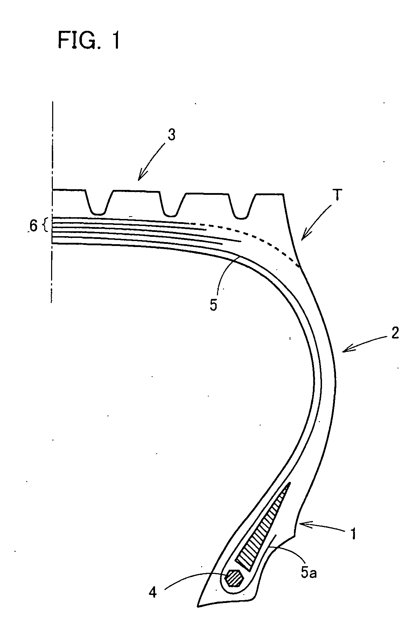

Fig. 1 shows a right half in cross section of an aired, radial-ply tire.

### DESCRIPTION OF THE PREFERRED EMBODIMENTS

The present invention provides a rubber compound containing pumice. Pumice refers to Shirasu and other similar, naturally produced volcanic detritus that is a significantly porous foam fired. It is harder than ice and softer than asphalt. As such, if a rubber compound for a tire contains pumice, the tire does not damage asphalt and can also sufficiently grip an icy surface. As pumice is porous, a rubber compound containing pumice allows water present between the tire and an icy surface to be adsorbed by a large number of pores of the pumice. Furthermore, at a tread rubber surface, the pumice drops in use and thus provides holes, and water produced between the tire and the icy surface is also adsorbed by the holes. The pumice that has not dropped scratches the icy surface to contribute to increased grip. By these effects, water between the tire and the icy surface can be removed and the tire can directly grip the icy surface. Thus the pumice containing rubber compound can produce a tire providing satisfactory grip.

In the present invention, pumice contains no less than 30% by mass, preferably no less than 50% by mass, more preferably no less than 70% by mass of silicon oxide. Pumice containing less than 30% by mass of silicon oxide is brittle and thus readily drops off a tread surface, and the tire insufficiently grips an icy surface.

The rubber compound has a JIS-A hardness of 55-75. A JIS-A hardness of no less than 55 ensures that the compound has sufficient abrasion resistance and the tire allows sufficient steering stability. A JIS-A hardness of no more than 75 allows satisfactory workability and satisfactory grip. Note that JIS-A hardness conforms to JISK6301 and is a value measured at 25°C.

The present invention employs pumice preferably containing no less than 50% by mass, more preferably no less than 65% by mass, most preferably no less than 80% by mass of particles of 45-250 µm in diameter. If pumice contains no less than 50% by mass of particles having a diameter of no less than 45 µm, then a tread having a rubber surface with the pumice having dropped off can have holes having a sufficient size and thus effectively taking in water to achieve excellent performance on ice. If the pumice contains no less than 50% by mass of particles having a diameter of no more than 250 µm, the rubber compound is free of the risk of having impaired workability and reduced abrasion resistance.

It is preferable if the pumice containing no less than 50% by mass of particles having a diameter of 45-250 µm is also formed of particles having an average diameter for example of no more than 250 µm as it can provide satisfactory workability and satisfactory abrasion resistance.

In the present invention a particle can be evaluated in diameter, as follows: relative to the mass of the entire pumice, the ratio in mass of particles passing through a sieve of 48 mesh and failing to pass through a sieve of 325 mesh is obtained in percentage to serve as a content of particles having a diameter of 45-250 µm, represented in percentage. Furthermore, the particles' average diameter can be obtained by measuring the diameters of the particles and counting the number of the particles, as seen in an image observed through a scanning electron microscope.

Preferably, 2-20 parts by mass of the pumice is contained relative to 100 parts by mass of the rubber compound. No less than 2 parts by mass of the pumice contained in the rubber compound allows sufficiently effectively improved grip. No more than 20 parts by mass of the pumice ensures that the rubber compound provides satisfactory workability and satisfactory abrasion resistance.

Pumice that can be used in the present invention for example includes KP pumice produced by KCM Corporation.

In the present invention, it is preferable that a silane coupling agent be blended. In particular, it is preferable that relative to 100 parts by mass of rubber 2-20 parts by mass of the pumice be blended and the silane coupling agent also be blended. The silane coupling agent blended together can contribute to enhanced adhesion at an interface of the rubber and the pumice internal to the tread and at a surface other than that which contacts the ground. This can reduce a crack starting between the rubber and the pumice and thus reduce lost blocks.

The present invention can employ a silane coupling agent including bis (3-triethoxysilylpropyl) tetrasulfide, bis (2-triethoxysilylethyl) tetrasulfide, bis (3-trimethoxysilylpropyl) tetrasulfide, bis (2-trimethoxysilylethyl) tetrasulfide, 3-mercaptopropyltrimethoxysilane, 3-mercaptopropyltriethoxysilane, 2-mercaptoethyltrimethoxysilane, 3-nitropropyltrimethoxysilane, 3-chloropropyltrimethoxysilane, 2-chloroethyltrimethoxysilane, 3-triethoxysilylpropyl-N,N-dimethylthiocarbamoyltetrasulfide, and the like.

Preferably the silane coupling agent is blended in an amount corresponding to 3-20% by mass relative to the amount of the pumice blended. If the agent is blended in an amount within the above range, the rubber and the pumice can have their interface sufficiently effectively enhanced in adhesion. Note that the agent blended in an amount larger than 20% by mass provides a tendency for cost to increase relative to degree of improvement in performance on ice.

The present rubber compound can contain as a rubber component natural rubber, isoprene rubber, a polybutadiene rubber (BR), styrene-butadiene rubber (SBR), ethylene-propylene-diene rubber (EPDM), chloroprene rubber (CR), acrylonitrile-butadiene rubber (NBR) or a butyl rubber (IIR), or two or more thereof mixed together. Of the above rubbers, for example EPDM can be ethylene-propylene rubber (EPM) containing diene as a third component including 1,4-pentadiene, 1,4-hexadiene, 1,5-hexadiene, 2,5-dimethyl-1,5-hexadiene or other similar, non-conjugated diene having a carbon number of 5-20, 1,4-cyclohexadiene, cyclooctadiene, dicyclopentadiene or other similar cyclic diene, 5-ethylidene-2-norbornene, 5-butylidene-2-norbornene, 2-methallyl-5-norbornene, 2-isopropenyl-5-norbornene or other similar, alkenyl norbornene. Of the above rubber components, natural rubber and polybutadiene rubber are preferably used as they have properties excellent at low temperature and allow close contact to the road.

For the present rubber component, relative to 100 parts by mass of the rubber component, for example 0.5-5.0 parts by mass of a vulcanizer and 0.5 to 4.0 parts by mass of a vulcanization accelerator can be blended together.

The vulcanizer can include sulfur, a sulfur compound and the like. For example, the sulfur compound can include morpholinedisulfide. The vulcanizer accelerator can include sulfeneamide compound, guanidine compound, thiazole compound, thiuram compound, thiourea compound, dithiocarbamic acid compound, aldehyde-amine compound, aldehyde-ammonia compound, imidazoline compound, xanthate compound, or the like.

Furthermore, together with the vulcanizer and/or the vulcanization accelerator a crosslinking initiator may be used. It can include organic peroxide, azo compound, oxime compound and the like. Only one or more than one of them mixed together may be used, although it is blended within a range that does not impair the rubber compound's desired properties.

The rubber compound can have added thereto other than the above components an additive that is typically blended to produce a rubber compound, within a range that does not impair a desired property. For example, relative to 100 parts by mass of the rubber component, 10-200 parts by mass of a filler can be blended. If the filler is blended in an amount falling within the above range, the rubber compound can have a JIS-A hardness within a desired range to ensure sufficient steering stability and sufficient abrasion resistance. Furthermore, 1.0-10 parts by mass of a softener, and also an antioxidant, a plasticizer, an adhesive and the like can be added in appropriate amount.

The filler can include carbon black, silica and the like. Particularly preferably, the carbon black has a size when it aggregates and porosity that allow a specific surface area by nitrogen adsorption of 50-200 m²/g, a DBP oil absorption of 50-130 ml/100g, and a specific surface area by CTAB adsorption of 50-170 m²/g as the rubber compound is not excessively hard and can thus provide satisfactory performance on ice as well as sufficient abrasion resistance. If the filler is silica, that allowing a specific surface area by nitrogen adsorption of 150-200 m²/g is preferably used.

If silica is used, the rubber component and the silica are coupled together by a reinforcement agent, which may for example be a silane coupling agent, an aluminate coupling agent, a titanium coupling agent or other similar coupling agent in an amount corresponding to 1-10% by mass of that of the silica blended.

The softener can include stearic acid, linolic acid, palmitic acid, lauric acid as well as liquid paraffin, process oil, vaseline and other similar oil softener, castor oil, flaxseed oil, coconut oil and other similar fatty oil softener, beeswax, carnauba wax and other similar wax, and the like. The adhesive can include rosin compound, terpene compound, phenol compound and other similar compound, oil resin, and the like.

The anti-oxidant can include amine compound, phenol compound, imidazole compound, metal salt of carbamic acid, wax and the like.

The plasticizer can include dimethyl phthalate (DMP), diethyl phthalate (DEP), dibutyl phthalate (DBP), dioctyl phthalate-(DOP), butyl benzyl phthalate (BBP), tetrahydrophthalic anhydride ester, tricresyl phosphate (TCP), triethyl phosphate (TEP), octyldiphenylphosphate, dioctyl adipate (DOA), dioctyl sebacate (DOS), and the like.

The present rubber compound may have added thereto organic or inorganic particles other than pumice within a range that does not impair a desired property. The particles are for example of one or more of quartz, emery, glass, iron oxide, alumina, silicon carbide and the like blended together.

Furthermore, the rubber compound can have acrylic fiber, nylon fiber, fluorine fiber, polyurethane fiber, alumina fiber, glass fiber, ceramic fiber and other similar short fiber, ionomer resin, AAS resin, ABS resin, fluororesin, polyacetal resin, polyamide resin, polystyrene resin and other similar resin powder, zinc compound, aluminum compound, copper compound, silicon compound, a fluorine compound and other similar inorganic powder, vegetable cellulose powder, and the like blended together to provide enhanced grip.

The present rubber compound can be produced by a generally used, known method. For example it can be produced by a method using a roll, a banbury mixer or the like to knead the compound and vulcanizing it for example at 140-150°C for 25-35 minutes.

The present rubber compound can suitably be used for tires for passenger cars, large winter tires for buses, trucks and the like, tires for reproduction, crawlers for snow mobiles, snowplow crawlers and the like at their treads. Hereinafter, an aired radial-ply tire will be referred to as an example to describe the present invention in a typical application. With reference to Fig. 1, an aired radial-ply tire T includes a pair of beads 1, a pair of sidewalls 2, a tread 3 adjacent to both of sidewalls 2, a carcass 5 embedded in the pair of beads 1 and bridging between the beads cores 4, and a belt 6 arranged outer than carcass 5 to reinforce tread 3. Carcass 5 has a body extending between cores 4, and a bent portion 5a extending radially inner than core 4, turned therearound, and extending upward radially outer than the core. Carcass 5 is formed of a ply formed of a steel cord or aramid or similar ultra-high strength, organic fiber cord radially arranged and coated with rubber. The present rubber compound for a tire is suitably used for example for tread 3 of an aired radial tire having such a basic structure as described above.

### Examples

### Examples 1-11 and Comparative Examples 1-3

With reference to Table 1 showing a tread's rubber composition, the materials to be blended that are contained in a component (A) are kneaded together using a banbury mixer at approximately 150°C for 5 minutes and the agents to be blended that are contained in a component (B) are added thereto and kneaded using a 2-axle open roll at approximately 80°C for 5 minutes. The resultant rubber compound is used to produce a tread sheet having a thickness of 3 mm, which is in turn vulcanized at 150°C for 35 minutes with 25 kgf (245.15525N) applied to prepare a testing sample. Note that the pumice and the carbon black are blended in the amounts as shown in Table 2.

**Table 1**

| Components to be Blended | | Parts by Mass |
|---|---|---|
| (A) | natural rubber | 70 |
| | polybutadiene rubber¹⁾ | 30 |
| | pumice²⁾ | Table 2 (a) |
| | carbon black (CB)³⁾ | Table 2(b) |
| | wax⁴⁾ | 2 |
| | stearic acid⁶⁾ | 2 |
| | zinc oxide ⁶⁾ | 5 |
| (B) | sulfur ⁷⁾ | 1 |
| | vulcanization accelerator⁸⁾ | 1.5 |

| | | |
|---|---|---|
| 1) polybutadiene rubber: BR 150B produced by Ube Industries, Ltd. | | |
| 2) pumice: KP Pumice produced by KCM Corporation | | |
| 3) carbon black: Diablack I (N220) produced by Mitsubishi Chemical Corporation | | |
| 4) wax: Sunnoc Wax produced by Ouchishinko Chemical Industrial Co., Ltd. 5) stearic acid produced by NOF Corporation | | |
| 6) zinc oxide: Ginrei R produced by Toho Zinc Co., Ltd. | | |
| 7) sulfur produced by Tsurumi Chemical Industry Co., Ltd. | | |
| 8) vulcanization accelerator: Nocceler NS (N-ter-butyl-2-benzothiazolylsulfenamide) produced by Ouchishinko Chemical Industrial Co., Ltd. | | |

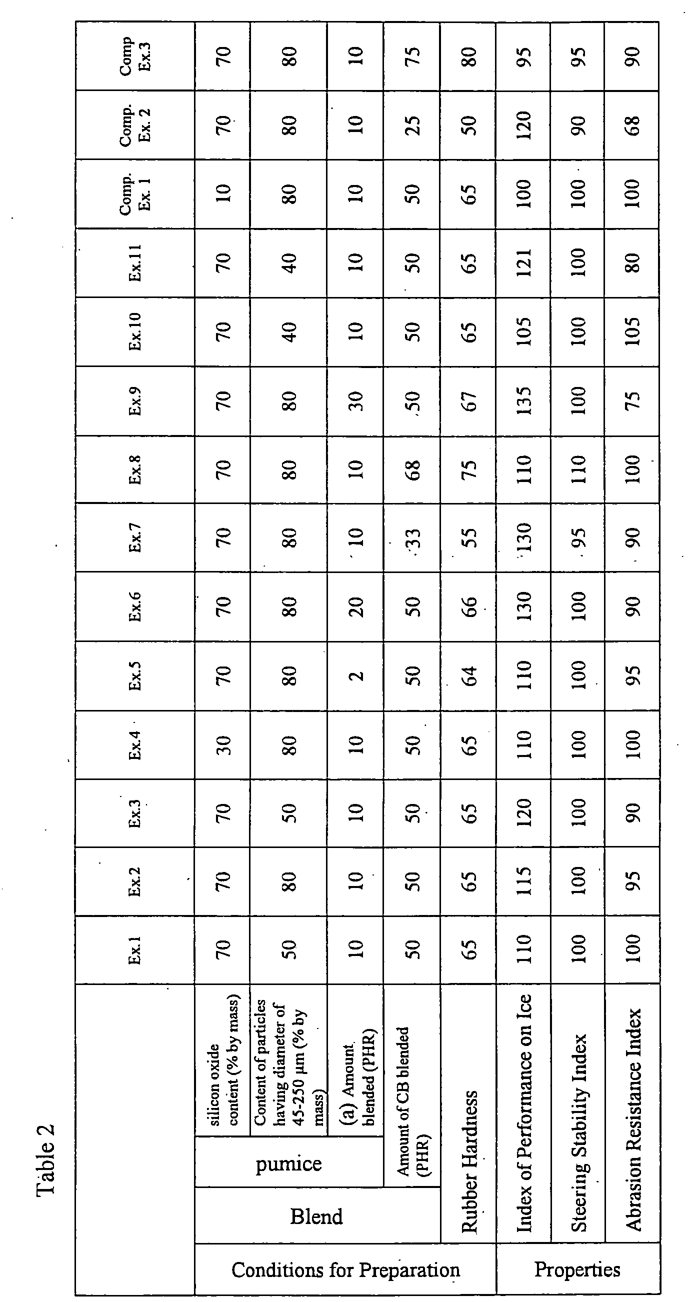

### Examples 12-24 and Comparative Example 4

With reference to Table 3 showing a tread's rubber composition, the materials to be blended that are contained in a component (A) are kneaded together using a banbury mixer at approximately 150°C for 5 minutes and the agents to be blended that are contained in a component (B) are added thereto and kneaded using a 2-axle open roll at approximately 80°C for 5 minutes. The resultant rubber compound is used to produce a tread sheet having a thickness of 50 mm, which is in turn vulcanized at 150°C for 35 minutes with 25 kgf (245.15525N) applied to prepare a testing sample. Note that the pumice and the carbon black are blended in the amounts as shown in Table 4.

**Table 3**

| Components to be Blended | | Parts by Mass |
|---|---|---|
| (A) | natural rubber | 70 |
| | polybutadiene rubber¹⁾ | 30 |
| | pumice²⁾ | Table 4(a) |
| | carbon black (CB)³⁾ | 50 |
| | wax⁴⁾ | 2 |
| | stearic acid⁵⁾ | 2 |
| | zinc oxide ⁶⁾ | 5 |
| | silane coupling agent⁹⁾ | Table 4(b) |
| (B) | sulfur⁷⁾ | 1 |
| | vulcanization accelerator⁸⁾ | 1.5 |

| | | |
|---|---|---|
| 9) silane coupling agent: Si69 (bis (3-triethoxysilylpropyl) tetrasulfide) produced by Degussa AG | | |

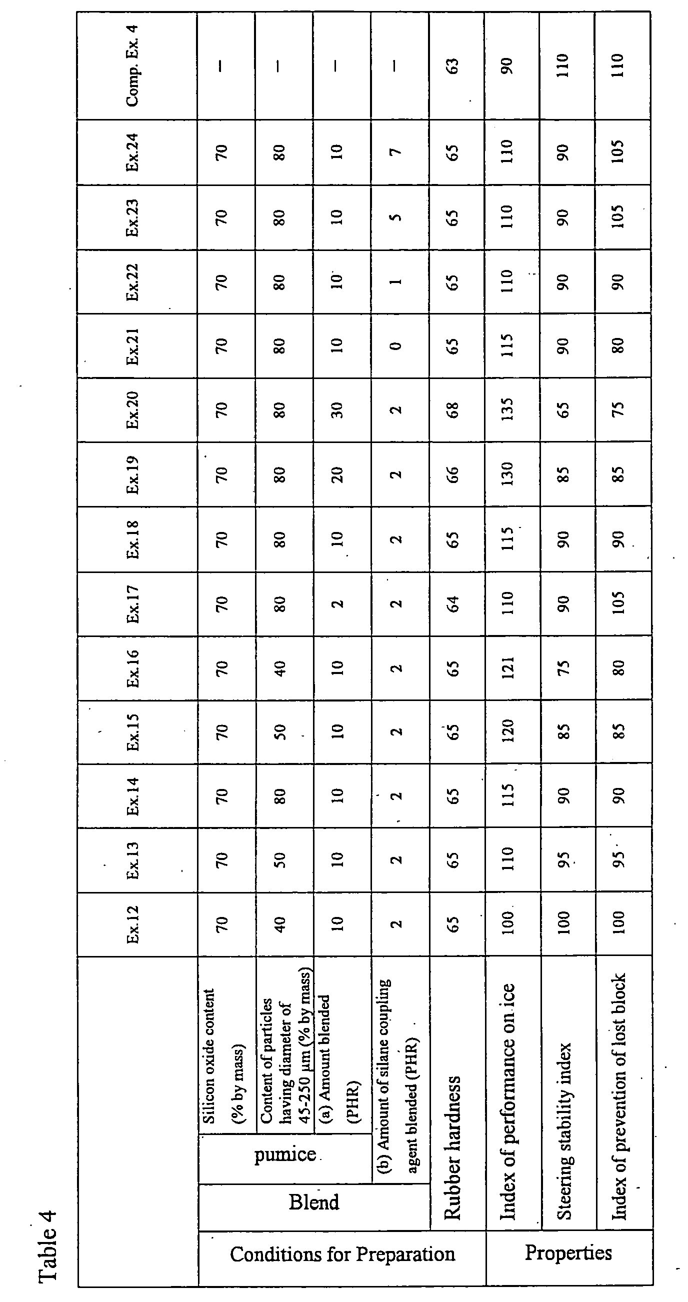

### (1) Rubber Hardness

A method as defined in JIS K6301 is used to measure JIS-A hardness of the obtained tread sheets at 25°C. The result is shown in Tables 2 and 4.

### (2) Index of Performance on Ice

The rubber compounds based on Tables 1-4 are used to produce studless tires (11R22.5) formed as shown in Fig. 1 for a truck and a bus. The tire is attached to a 10-ton vehicle, and the vehicle is run at a temperature of - 6 to - 1 °C on an icy test course for evaluation of performance on ice. At a speed of 30 km per hour a lock brake is stepped on to measure the distance that the vehicle runs on ice before it stops (evaluation for braking). Furthermore, the vehicle is started, accelerated and stopped on ice to evaluate how the driver feels (evaluation for feeling). The braking and the feeling are put together and represented for performance on ice, as shown in Tables 2 and 4. In Table 2 Comparative Example 1 is represented by an index of 100 and in Table 4 Example 12 is represented by an index of 100, and the other examples are relatively represented. A larger index indicates better performance on ice.

### (3) Steering Stability Index

The rubber compounds based on Tables 1 and 2 are used to produce studless tires (11R22.5) formed as shown in Fig. 1 for a truck and a bus. The tire is attached to a 10-ton vehicle, and the vehicle is run at a temperature of - 10 to 0°C on an icy test course for evaluation of steering stability. At a speed of 50 km per hour the vehicle is run straight ahead to evaluate stability and cornered to see how the driver feels. The result is shown in Table 2. Comparative Example 1 is represented by an index of 100 and the other examples are relatively represented. A larger index indicates better steering stability.

### (4) Abrasion Resistance Index

The rubber compounds based on Tables 1-4 are used to prepare test pieces of 5 cm in diameter and 0.5 cm in width. A Lambourn abrasion tester manufactured by Iwamoto Seisakusho is used to measure the pieces for abrasion such that they are rotated at a rate of 50m/min, as measured at a surface, and experience a load of 4.5 kg, with sand dropped in an amount of 15g/min. and a slip rate of 50%. The result is shown in Tables 2 and 4 such that Comparative Example 1 and Example 12, respectively, are represented by an index of 100 and the other examples are relatively represented. A larger index indicates more excellent abrasion resistance.

### (5) Index of Prevention of Lost Block

The rubber compounds shown in Tables 3 and 4 are used in a method similar to that of item (2) to prepare studless tires which are in turn attached to a 10-ton vehicle at a left front wheel and mounted on a brake tester. The tire is subjected to braking once for every 20 minutes at eight portions in total to damage blocks to measure lost block in millimeters. Example 12 is represented by an index of 100 and the other examples are relatively represented, as shown in Table 4.

It can be seen that Examples 1-11 as compared with Comparative Examples 1-3 are improved in performance on ice or abrasion resistance and have performance on ice, steering stability and abrasion resistance well balanced. For example, Example 2 and Comparative Example 1 provide rubber compounds prepared under the same conditions except that in Example 2 the pumice contains 70% by mass of silicon oxide whereas in Comparative Example 1 the pumice contains 10% by mass of silicon oxide, and Example 2 provides an index of performance on ice of 115 and an abrasion resistance index of 95. It can be seen that Example 2 as compared with Comparative Example 1 does not have a significant reduction in steering stability or abrasion resistance and achieves a significant improvement in performance on ice.

Example 9 prepares a rubber compound under a condition similar to that for Example 2 except that Example 9 blends 30 parts by mass of the pumice relative to 100 parts by mass of the rubber component. Furthermore, Examples 10 and 11 prepare rubber compounds under a condition similar to that for Example 2 except that Examples 10 and 11 allow the pumice to contain 40% by mass of particles having a diameter of 45-250 µm. Example 2 as compared with Examples 9-11 achieves a particularly excellent balance between performance on ice, steering stability, and abrasion resistance. These results reveal that the present rubber compound provides a tire excellent in performance on ice and steering stability without significantly reduced abrasion resistance and if the pumice have their particles controlled in diameter and are also blended in a controlled amount, further excellent performance can be obtained.

When Table 4 is noted, it can be seen that Examples 12-14 as compared with Comparative Example 4 failing to blend the pumice are all significantly improved in performance on ice. In particular, Examples 13-15, 17-19 and 22-24 in which relative to 100 parts by mass of the rubber component 2-20 parts by mass of pumice containing no less than 50% by mass of particles having a diameter of 45-250 µm and a silane coupling agent are blended, are significantly improved in performance on ice, and also provide practicable steering stability and practicably prevent lost blocks. For prevention of lost blocks, in particular, it can be seen that these examples are further improved as compared for example with Example 20 blending a large amount of the pumice and Example 21 failing to blend the silane coupling agent.

Thus in accordance with the present invention it can be seen that using a specific type of pumice allows improved performance on ice and enhanced steering stability without reduced abrasion resistance and blending a prescribed amount of the pumice together with a silane coupling agent can better prevent a tire from losing block(s).

The present rubber compound is formed by blending pumice having no less than a fixed content of silicon oxide into a rubber compound and setting the rubber compound's JIS-A hardness to fall within a fixed range to effectively remove water present between the tire and an icy surface so that the tire can sufficiently grip the icy surface. The tire can thus have achieve improved performance on ice and enhanced steering stability without reduced abrasion resistance. Furthermore, preferably, together with a prescribed amount of the pumice a silane coupling agent can be blended to provide a tire achieving improved performance on ice and enhanced steering stability and in addition further preventing lost block(s).

Although the present invention has been described and illustrated in detail, it is clearly understood that the same is by way of illustration and example only and is not to be taken by way of limitation, the spirit and scope of the present invention being limited only by the terms of the appended claims.

## Claims

1. A rubber compound for a tire, containing pumice containing no less than 30% by mass of silicon oxide, and having a JIS-A hardness of 55-75.

2. The rubber compound of claim 1, wherein said pumice contains no less than 50% by mass of particles having a diameter of 45-250 µm.

3. The rubber compound of claim 1 or 2, wherein 2-20 parts by mass of said pumice is blended relative to 100 parts by mass of rubber.

4. The rubber compound of any of claims 1-3, wherein a silane coupling agent is blended together.

5. A tire having a tread formed using the rubber compound of claims 1-4.
